# FASCICULE DE BREVET EUROPEEN

(11) **EP 1 172 719 B1**
(45) Date de publication et mention de la délivrance du brevet: **11.02.2004**
(21) Numéro de dépôt: 01202945.0
(22) Date de dépôt: 27.11.1998
(51) Int. Cl.: G05D 1/02, B25J 19/00, A47L 9/00

(54) **Améliorations à des robots mobiles et à leur système de commande**
Verbesserungen bei beweglichen Robotern und bei ihren Steuerungssystemen
Improvements to mobile robots and their control system

(30) Priorité: 27.11.1997 BE 9700958; 22.12.1997 BE 9701046; 07.05.1998 BE 9800341
(43) Date de publication de la demande: 16.01.2002
(62) Demande divisionnaire de: 98956726.8
(73) Titulaire: Solar & Robotics S.A., 1050 Bruxelles (BE)
(72) Inventeur: Colens, André, 1330 Rixensart (BE)
(74) Mandataire: Colens, Alain

(56) Documents cités:
- WO-A-97/40734

## Description

La présente invention concerne un robot mobile autonome, plus particulièrement un robot de nettoyage, et un système de contrôle d'un robot comportant une brosse rotative et apte à le dégager lors du blocage de ladite brosse, et éventuellemnt apte à adapter son comportement au degré local de saleté.

L'invention propose ainsi un robot de nettoyage d'une surface comportant comme élément de nettoyage au moins une brosse rotative et comportant un microordinateur contrôlant au moins, via un algorithme, la vitesse et/ou le trajet du robot. Le microordinateur peut être associé à un algorithme qui tient au moins compte, pour déterminer ladite vitesse et/ou ledit trajet, de la mesure de la vitesse de rotation de ladite brosse rotative. Le robot de nettoyage est typiquement un robot aspirateur.

Avantageusement, le microordinateur du robot-aspirateur tient au moins compte, pour déterminer la puissance d'aspiration, de la mesure de la vitesse de rotation de ladite brosse rotative. La puissance d'aspiration peut entre autres être dépendante de la vitesse de rotation de ladite brosse.

Le microordinateur est donc apte à tenir compte de la mesure de la vitesse de rotation du moteur pour déterminer le comportement dudit robot.

La présence de brosse rotative présente cependant l'inconvénient de voir la brosse se bloquer lorsque celle-ci rencontre, par exemple, les franges d'un tapis disposé sur la surface à nettoyer.

Une solution à ce problème a été décrite dans la demande de brevet PCT WO 97/40734 et consiste à inverser le sens de rotation de la brosse de manière à la dégager.

La solution de la présente demande a l'avantage de ne pas nécessiter un contrôle précis de la brosse ni une inversion de son sens de rotation de la brosse ce qui simplifie la conception du robot. Cette solution plus simple s'est par ailleurs révélée plus efficace en pratique.

L'invention propose donc un robot de nettoyage comportant une brosse rotative et un microordinateur, un moyen de détection du blocage de la brosse rotative associé audit microordinateur, un algorithme de dégagement du robot, un moyen de débrayage de la brosse rotative par rapport au moteur y associé, l'algorithme comprenant, lors d'un blocage, une opération de débrayage et un mouvement de recul du robot suivi d'une rotation et d'une reprise de l'avancement. D'autres aspects de l'invention sont dévrits dans les revendications dépendantes annexées.

Un dispositif selon l'invention comprend un système de brosse rotative - entraîné par un moteur - activé par le microcontrôleur (ou microordinateur) commandant l'ensemble des fonctions du robot autonome. Il est fait référence à cet égard à la demande de brevet PCT WO 96/01072 incorporée par référence dans la présente demande.

La vitesse de rotation de la brosse est analysée par le microcontrôleur, de préférence constamment.

Cette mesure peut être réalisée selon plusieurs techniques connues en soi (mesure du courant consommé par le moteur dans le cas d'un moteur DC, mesure de la fréquence des impulsions dans le cas d'un moteur sans balais, codeur optique, ... ).

La mesure de cette vitesse de rotation permet au microcontrôleur de déduire certaines informations concernant, par exemple, la nature du sol nettoyé ou l'occurence d'un incident et d'adapter le comportement du robot en conséquence.

Lors de la survenue d'un incident, l'arrêt de la rotation de la brosse provoqué par exemple par l'enroulement de franges d'un tapis autour de l'axe de la brosse, le microcontrôleur débrayera la brosse et fera effectuer au robot une série de manoeuvres de désengagement. Le débrayage peut être selon la conception du robot, un débrayage mécanique mais sera de préférence un débrayage électrique, obtenu en coupant la connection du moteur à son alimentation.

A titre d'exemple on notera ci-après une série de manoeuvres s'étant révélées particulièrement adaptées.

Le robot recule d'une distance égale à son diamètre (brosse débrayée). Ce faisant les franges exercent un effort de déroulement sur l'axe de la brosse qui est en roue libre.

La brosse se libère. Le recul amène le robot en dehors de la zone de frange. Celui-ci effectue alors une rotation tout en réembrayant la brosse. Si à cet instant la brosse est toujours bloquée, il arrête son mouvement de rotation et effectue un nouveau recul suivi d'une nouvelle tentative de rotation et ainsi de suite jusqu'à ce que la brosse soit dégagée.

Le nombre de réitérations maximal est fixé par le programme et par la distance libre maximale de recul du robot.

Si cette distance maximale est atteinte sans que la brosse ne soit dégagée, le robot continuera les itérations mais en marche avant.

Si aucune manoeuvre ne réussit à libérer la brosse, le robot se met en signal d'attente et une intervention manuelle est nécessaire.

Avantageusement, l'analyse de vitesse de rotation de la brosse permet aussi de connaître la nature du sol nettoyé.

Une vitesse de rotation élevée signale un sol lisse, une vitesse plus lente un sol recouvert de moquette d'autant plus épaisse que la vitesse est lente. Cette analyse permet au robot d'adapter la vitesse d'avance et la puissance d'aspiration en fonction du sol à nettoyer.

L'invention peut être appliquée à d'autres robots de nettoyage que des robots-aspirateurs, par exemple des robots pour nettoyer des surfaces quelconques avec des liquides de nettoyage ou des robots pour cirer des parquets.

L'invention concerne donc un robot de nettoyage comportant une brosse rotative et un microordinateur, un moyen de détection du blocage de la brosse rotative associé audit microordinateur, un algorithme de dégagement du robot, un moyen de débrayage de la brosse rotative par rapport au moteur y associé, l'algorithme comprenant un mouvement de recul du robot suivi d'une rotation et d'une reprise de l'avancement du robot.

Le moyen de débrayage consiste avantageusement en la déconnection du moteur par rapport à sa source d'alimentation.

En résumé, le robot de nettoyage d'une surface selon un aspect de l'invention comporte au moins une brosse rotative, la vitesse et/ou le trajet et/ou l'éventuelle puissance d'aspiration d'une turbine, étant dépendante de la vitesse de rotation de ladite brosse rotative.

Pour un robot aspirateur, en particulier domestique, le mouvement de rotation de la brosse a lieu de préférence dans un plan vertical à la surface à nettoyer.

L'invention concerne aussi un procédé de fonctionnement d'un robot de nettoyage comme susmentionné, le blocage de la brosse rotative étant détecté par ledit microordinateur qui contrôle dès lors une opération de dégagement du robot, ladite opération de dégagement comportant au moins un débrayage de la dite brosse rotative par rapport au moteur l'entraînant, couplé à un mouvement de recul du robot suivi d'une rotation et d'une reprise de l'avancement du robot. L'opération de dégagement est éventuellement susceptible de comprendre plusieurs cycles de débrayage-recul-rotation-avancement.

La présente invention divulgue également concerne une technique de guidage pour le nettoyage de sol par aspiration de poussière, applicable aux robots de nettoyage autonomes.

Le document EP-A-0769923 propose un engin autonome mobile de nettoyage de sol par aspiration, de faible puissance et de petite taille lui permettant de couvrir facilement une surface encombrée, par exemple, de meubles.

La recharge des batteries du robot est avantageusement couplée à la décharge de la poussière accumulée.

Le contenu du document susmentionné est incorporé par référence dans la présente description.

La faible puissance de ce robot aspirateur ne permet cependant pas toujours d'effectuer un nettoyage approfondi en un seul passage. Il peut donc être nécessaire lorsque l'engin est à l'aplomb d'une surface particulièrement encrassée, de prévoir un temps de passage plus long (par exemple passant de 20 cm/sec à 10 cm/sec) et/ou un trajet comportant des passages complémentaires pour nettoyer complètement la surface.

Dans ce but une technique de nettoyage particulière est proposée, technique applicable à tout robot autonome de nettoyage par aspiration et/ou brossage.

La technique de guidage pour le nettoyage de sol par un robot aspirateur peut en effet être caractérisé en ce que le trajet suivi par le robot dépend de la quantité de particules présente sur la surface à nettoyer, ladite quantité étant estimée par un analyseur de particules situé à proximité de l'orifice d'aspiration, ou dans une cavité de brossage du robot, ledit analyseur envoyant des signaux à un microordinateur porté par le robot mobile et commandant le déplacement du robot en fonction des dits signaux.

Par ailleurs, ledit analyseur de particules peut avoir aussi comme fonction de déterminer également le degré de remplissage du réservoir à poussière. Si la poussière s'accumule au delà d'un certain point un même faisceau infrarouge localisé après l'orifice d'aspiration, c'est à dire au niveau du réservoir précédent le filtre, sera interrompu, ce que le microordinateur interprètera comme un signal correspondant.

En fonction de la quantité mesurée de poussière aspirée, le microordinateur peut par exemple commander un ralentissement et/ou un mouvement de va et vient linéaire du robot mobile.

Le microordinateur peut aussi commander un mouvement de nettoyage systématique, par exemple un mouvement de va et vient en éventail, du robot mobile.

Avantageusement le microordinateur peut prendre en compte la grosseur des particules et leur nombre, selon l'amplitude et la fréquence des signaux émis par l'analyseur de particules. Une analyse du type de poussière récoltée grâce à la connaissance de la grosseur des grains et de leur nombre permet d'affiner le comportement du robot en agissant sur la trajectoire, la vitesse de rotation de la brosse et/ou la puissance de la turbine de l'aspirateur.

L'analyseur de poussière comporte par exemple un émetteur et un récepteur, de préférence infrarouge.

Le microordinateur peut avantageusement garder en mémoire une moyenne globale du niveau de poussière détectée par le détecteur de poussière sur une grande distance, l'activation d'un algorithme de nettoyage particulier tenant compte de ladite moyenne.

De plus, avantageusement, le robot aspirateur peut comprendre un détecteur de poussière dont un ou plusieurs éléments sont périodiquement ou constamment désencrassés automatiquement par un flux d'air dépoussiéré dirigé vers sa surface.

Selon encore un autre aspect de l'invention, qui peut s'appliquer à tout robot mobile autonome, plus avantageusement à des robots de grande dimension (p.e. 80 à 250 cm), le robot comporte un senseur de collision linéaire entourant en totalité ou en partie la base du carénage dans le plan de déplacement. Le senseur est constitué d'un conducteur linéaire métallique et, parallèlement, un élément linéaire en plastique conducteur, par exemple en caoutchouc conducteur. L'ensemble peut être compris dans une gaine ou une membrane souple isolante fixé le long du bord de la carrosserie. Par exemple, les éléments linéaires sont fixés par collage à deux faces internes opposées de la gaine. Ces deux éléments sont séparés par une faible distance. Les extrémités du plastique conducteur sont soumises à une différence de potentiel, par exemple de 5 volt soit 0 volt à une extrémité et 5 volt à l'autre extrémité. Lors d'une collision du robot avec un obstacle frontal ou latéral un des deux éléments est apte à entrer élastiquement en contact avec l'autre élément sous l'effet d'une pression momentanée résultant de l'impact du robot avec un obstacle. On comprendra que la tension instantanée sur l'élément conducteur est fonction de la distance du point d'impact à une des extrémité du plastique conducteur, qui présente une résistance beaucoup plus importante. Ainsi une tension mesurée de 2,5 volt signifie que l'impact a eu lieu approximativement au milieu du senseur linéaire. La mesure de la tension au niveau de l'élément conducteur constitue ainsi un signal envoyé au microordinateur pour localiser le point d'impact sur la base du carénage.

Les améliorations selon l'invention s'appliquent particulièrement aux robots mobiles se déplaçant, en mode de fonctionnement normal, de manière aléatoire sans système de positionnement précis.

Les différents aspects de l'invention seront mieux compris à la lecture de la description complémentaire qui suit, qui se réfère aux dessins fournis en annexe à titre d'exemple uniquement, et donc sans limiter la portée de cette description complémentaire. Chaque caractéristique décrite, prise séparément, est généralisable en fonction de la connaissance de l'homme de l'art. Les références numériques identiques d'un dessin à l'autre se rapportent à des éléments identiques ou équivalents.

Dans les dessins,
la fig. 1 représente schématiquement la station et un robot mobile s'en approchant
la fig. 2 représente schématiquement, vu du dessus, un robot mobile circulaire.
la fig. 3 est une vue schématique en coupe de face d'une unité d'aspiration d'un robot muni d'une brosse selon l'invention et d'un système de détection de poussière.
la fig. 4 est une vie schématique de côté d'un robot à brosse selon l'invention
la fig. 5 est une vue illustrant la technique de nettoyage
la fig. 6 illustre un robot aspirateur à brosse vu de côté
la fig. 7 illustre le robot de la fig. 10 vu de face
la fig. 8 illustre un algorithme de désengagement lors du blocage de la brosse
les figs. 9a à 9c illustrent un procédé de localisation du point d'impact du robot avec un obstacle.

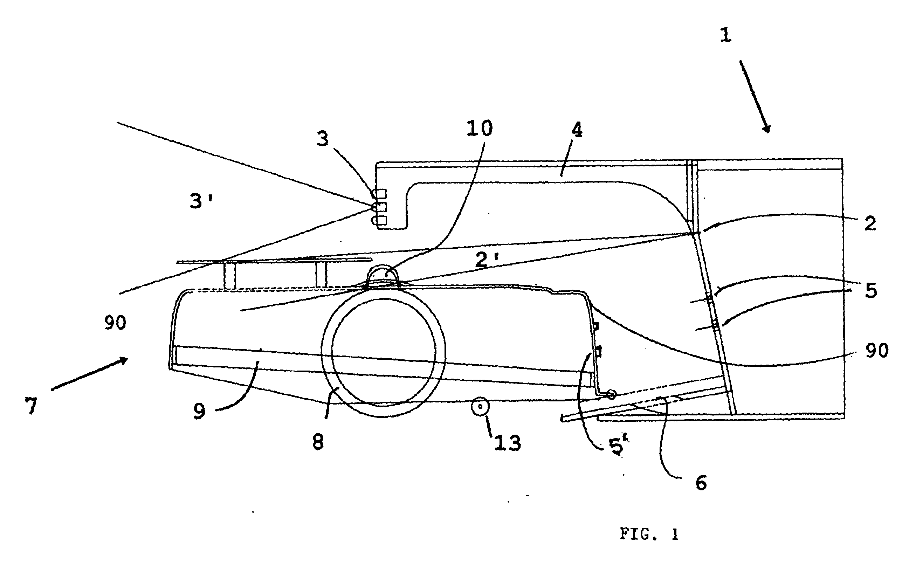

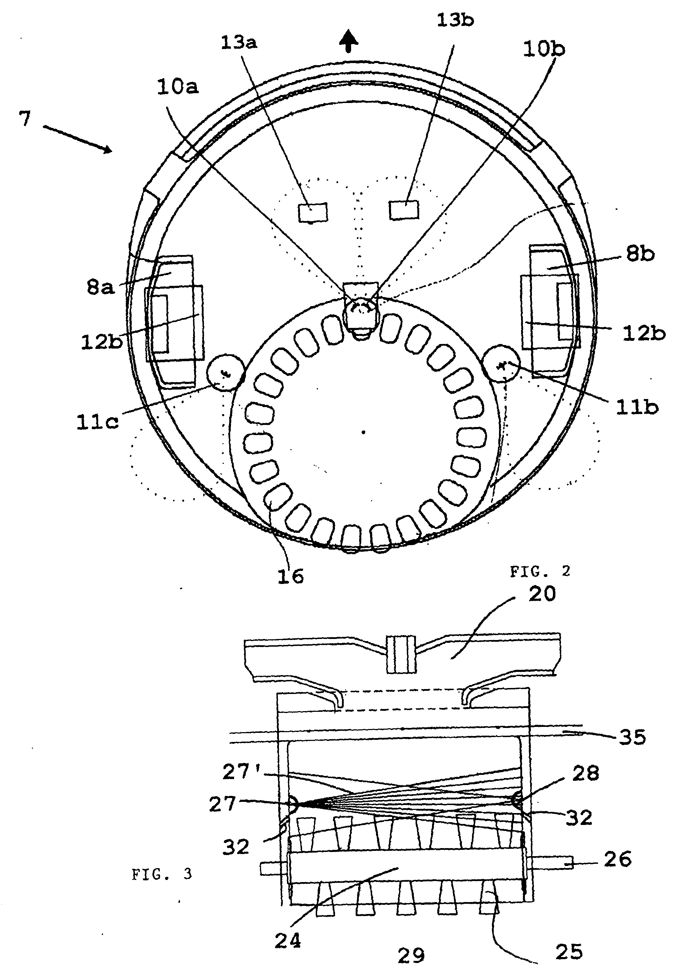

Le robot mobile 7 illustré schématiquement aux figs. 1 et 2 est un robot aspirateur comportant une ou plusieurs batteries rechargeables. Le robot est essentiellement circulaire et comporte deux roues motrices 8, permettant notamment une rotation sur lui-même. On distingue une bague circulaire de renforcement latéral de la carrosserie 90.

On distingue disposés en cercle les orifices 16 de sortie de la turbine de l'aspirateur. On distingue également les deux roues motrices 8a, 8b entraînées par les deux moteurs 12a,12b et des petites roulettes libres 13 à proximité de l'orifice d'aspiration (non illustré).

L'engin comporte en son centre de rotation au moins un capteur infrarouge 10 directionnel, de préférence deux (10a, 10b), dans ce dernier cas de préférence faisant entre eux un angle égal à leur angle de détection. Le ou les capteurs étant orientés dans le sens de -l'avancement de l'engin mobile. Un ou des capteurs supplémentaires 11a, 11b orientés autrement, de préférence vers l'arrière peuvent utilement compléter le dispositif. L'emplacement de ce ou ces capteurs supplémentaires ne devant pas nécessairement se situer au ou à proximité du centre de rotation de l'engin. Les signaux provenant des différents capteurs sont amplifiés, filtrés et connectés au microprocesseur contrôlant le déplacement de l'engin, par l'intermédiaire d'un convertisseur A/D. Les lobes de sensibilité de détection (directionalité) sont illustrés en pointillés.

Les signaux peuvent éventuellement être multiplexés c.à.d. analysés séquentiellement par le microordinateur contenu dans le robot, chaque signal étant connecté à son tour à la chaîne d'amplification et de conversion par l'intermédiaire d'un commutateur électronique.

Un aspect de la présente invention est illustré aux figs. 3 à 5

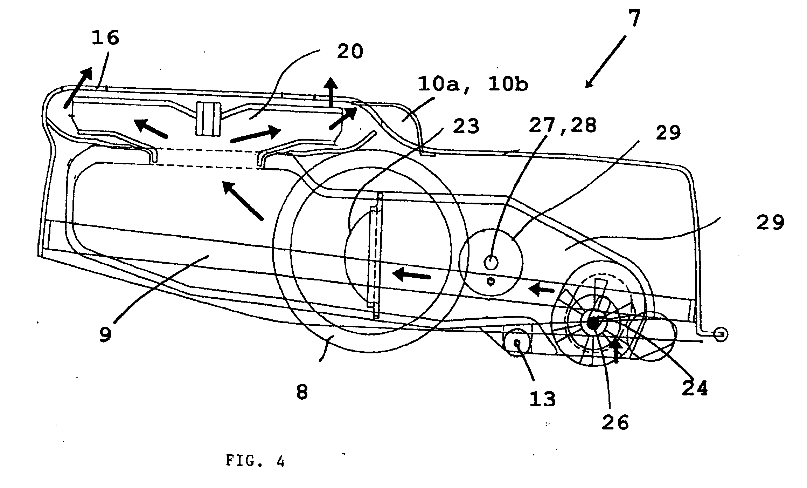

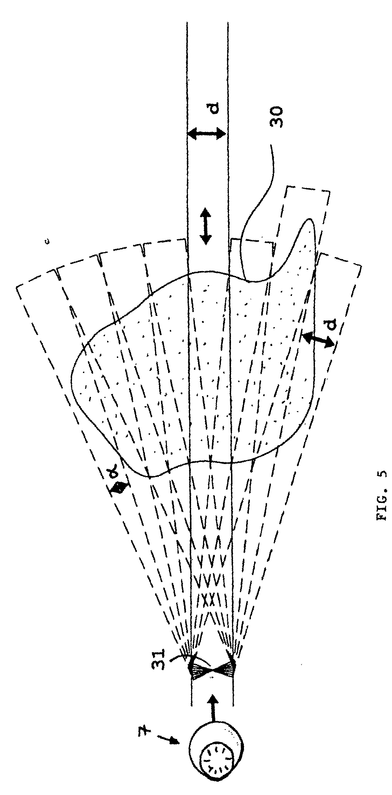

la fig. 3 est une vue schématique en coupe de face de l'unité d'aspiration du robot supporté par un élément du chassis 35, variante du robot des figures 4 et 5. Ce robot est muni d'une brosse 24 constitué de balais 25 tournant autour d'un axe 26.

On distingue dans la fig. 4 la turbine d'aspiration 20, des roues motrices 21, un filtre 23, l'aire circulaire 29 d'éclairage de l'émetteur 27, aire centrée sur le détecteur 28 , et des détecteurs infrarouge 10a, 10b. Les flèches de la fig. 4 illustrent le trajet de l'air dans le robot aspirateur.

Le dispositif particulier de détection de poussière selon un mode de mise en oeuvre de l'invention est prévu dans le robot mobile et comporte deux parties :
- Un analyseur de poussière d'une part constitué d'un élément émetteur infrarouge 27 et d'un élément récepteur infrarouge 28. Ces deux éléments sont disposés de part et d'autre de l'orifice d'aspiration 29 et sont placés dans l'axe l'un de l'autre. Lorsque des poussières sont aspirées ou projetées par la brosse rotative 24, elles créent en passant entre l'élément émetteur et l'élément récepteur une diffraction de la lumière 27' générant une variation de signal à la sortie de l'élément récepteur 28.

L'amplitude de la variation de signal est approximativement proportionnelle à la grosseur des grains et sa fréquence au nombre de grains passant par seconde à travers le faisceau.

Ce signal amplifié par un amplificateur logarithmique est analysé par le microordinateur contrôlant l'engin.

La valeur de l'intensité moyenne du faisceau reçu par le récepteur est également communiquée au microordinateur .
- D'autre part le microordinateur possède un programme lui permettant de réagir en fonction des éléments qui lui sont communiqués par l'analyseur susmentionné.

Le fonctionnement de l'engin selon ce mode de mise en oeuvre est décrit ci-après.

Lorsque l'engin se déplace sur la surface à nettoyer, le signal provenant du détecteur de poussière est constamment analysé par le microordinateur. Celui-ci fait réagir l'engin par exemple de la manière suivante :
- Si la surface sale est petite (détection de particules sur une distance inférieure à 1 cm), l'engin diminue sa vitesse de manière à augmenter le temps de nettoyage dans la zone considérée. Cette variation de vitesse peut être également liée à la dimension et à la fréquence des grains détectés.
- Si la surface sale est plus importante (détection de particules sur une distance comprise p.e. entre 1 et 5 cm), l'engin effectue un mouvement de va et vient jusqu'à ce que il ne détecte plus de poussière, il poursuit alors sa route.
- Si finalement la surface sale est suffisamment importante (p.e. plus de 5 cm), l'engin rentre dans un mode de nettoyage systématique tel que décrit dans la figure 5.

Dans la fig. 5 la distance d est la largeur effective d'aspiration de l'engin 7.

L'engin guidé par le microordinateur commence par faire un aller et retour pour déterminer la longueur totale de la tache 30. Revenu à son point de départ 31, il effectue une rotation à droite d'un angle α fonction de la longueur de la tache, il progresse jusqu'au bord de la tache 30 et revient à son point de départ 31 pour effectuer une nouvelle rotation à droite. Ainsi de suite jusqu'à ce que la partie droite de la tache soit nettoyée (absence de détection de particules). Il s'oriente à nouveau dans l'axe de la tache en tournant à gauche d'un angle égal à la somme des incréments effectués vers la droite et réitère le même scénario à partir du centre mais vers la gauche.

Lorsqu'une absence de particules aura été détectée sur la gauche, il revient au centre 31 et reprend sa progression normale.

D'autres algorithmes de nettoyage systématique peuvent être adoptés (parcours en spirale etc..), de manière moins préférée.

Le niveau de saleté pouvant différer fortement d'un local à l'autre, il peut être intéressant de démarrer le processus de nettoyage systématique tel que décrit précédemment seulement si le niveau de saleté instantanée est nettement supérieur au niveau moyen du local. Ceci est réalisé en gardant en mémoire une moyenne globale du niveau de poussière détectée par le détecteur de poussière sur une grande distance.

Le système de détection de poussière peut être monté de telle sorte qu'un flux d'air dépoussiéré ou sans poussière soit dirigé vers le détecteur et/ou l'émetteur 27, 28 pour empêcher l'encrassement rapide de ceux-ci.

Ce flux est amené par exemple par des canaux 32 prévu dans la paroi s'ouvrant en un orifice situé sous le détecteur et/ou l'émetteur. Alternativement et de manière actuellement moins préférée, le flux d'air peut être amené par une conduite déviant l'air rejeté par la turbine.

Un encrassement pourrait cependant quand même se produire diminuant l'amplitude des signaux reçus. Cet encrassement est détecté par le microordinateur grâce au second signal provenant du détecteur (intensité moyenne du faisceau). Le microordinateur peut soit tenir compte de cet encrassement en compensant automatiquement les lectures faites, soit agir sur l'émetteur infrarouge de manière à garder constante l'illumination moyenne du récepteur.

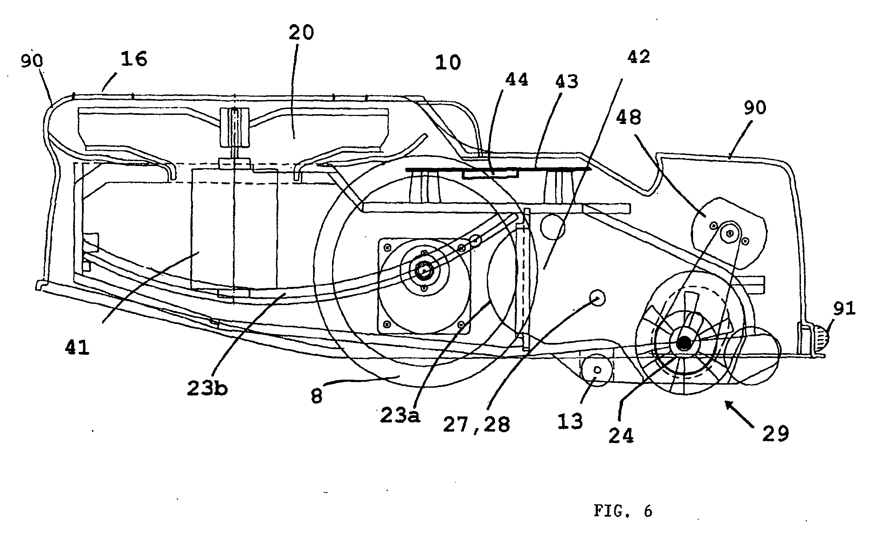

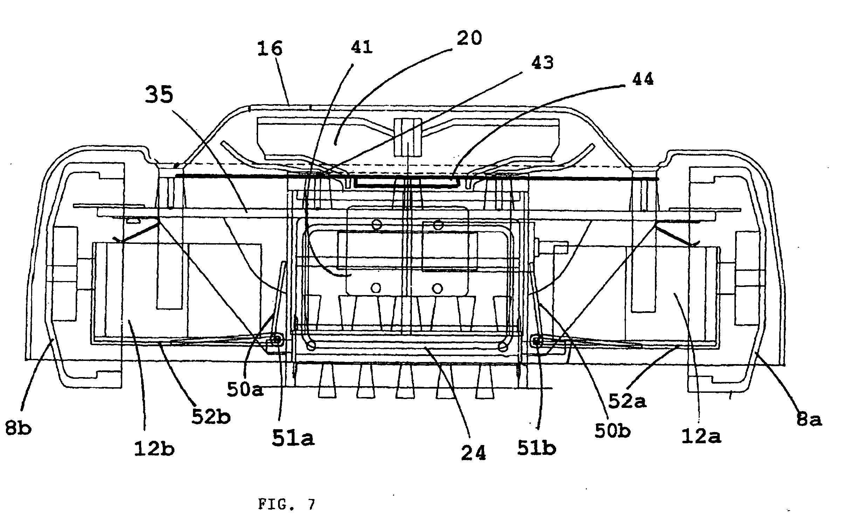

Les figs. 6 et 7 illustrent les composants d'un robot aspirateur avec brosse et détection de poussière selon un autre mode de mise en oeuvre de l'invention.

On y distingue une turbine 20 avec le moteur y associé 41 pour aspirer l'air et la poussière de l'orifice d'aspiration 29. On distingue également : un premier filtre 23a, et un second filtre 23b, plus fin, les roues motrices 8a et 8b, et les motoréducteurs 12a, 12b et une paire de roulettes 13, le moteur 48 de la brosse rotative 24, le réservoir à poussière 42 les détecteurs IR avants 10 et la butée 91 sur la carrosserie 90. On illustre également la carte de circuits intégrés 43 supportant le microprocesseur 44. A la fig. 10, on distingue plus précisément les ressorts de suspension 50a, 50b à deux bras (avec axe 51a, 51b) et les supports articulés 52, 52a des moteurs 12a, 12b.

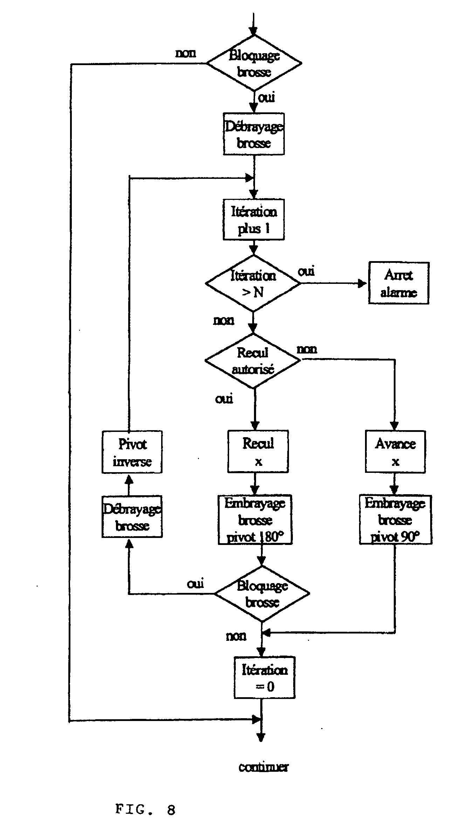

La figure 8 représente un diagramme illustrant un exemple d'algorithme selon l'invention, intervenant en cas de blocage de la brosse du robot.

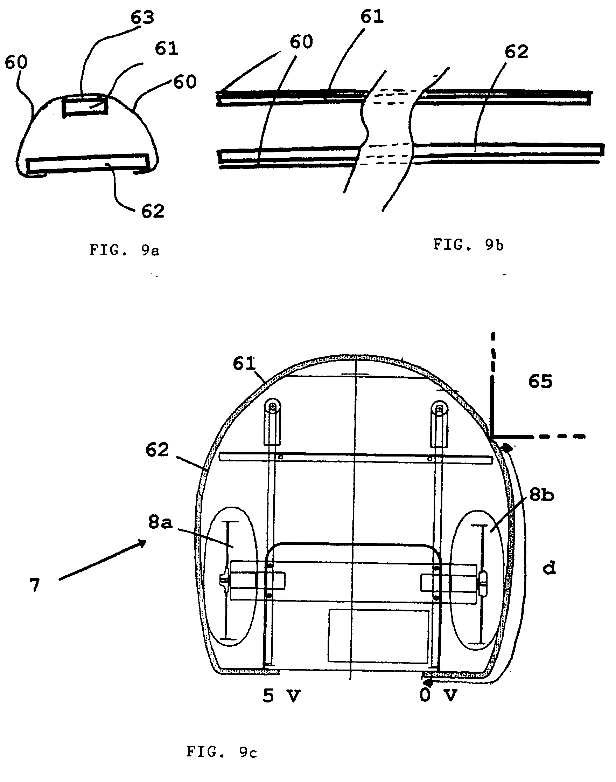

Les figs. 9a à 9c représentent un dispositif de détection du point d'impact du robot avec un obstacle. La fig. 9a est une coupe transversale, la figure 9b est une coupe longitudinale et la figure 9c représente les élément 61, 62 entourant le robot 7 (la gaine 60 n'est pas représentée).

La base du robot est essentiellement entourée, dans le plan de déplacement, d'un élément creux isolant linéaire 60. Cet élément 60 comprend intérieurement et longitudinalement un élément résistif linéaire souple 61 solidaire via la colle 63 à une partie extérieure, par rapport au robot, de la face interne. Cet élément est un élément résistif constitué d'un caoutchouc conducteur. Les extrémités de cet élément résistif sont soumis à une différence de potentiel de 5 V. Opposé à cet élément résistif 61 on prévoit un élément conducteur métallique 62 éventuellement solidaire de 60 également par collage. Un impact d'un obstacle 65 sur l'élément 60 provoquera un contact élastique entre l'élément résistif 61 et l'élément conducteur 62. La mesure de la tension sur le conducteur permet de déterminer la distance d et donc la localisation de l'impact. On comprendra que cette technique de détection de point d'impact peut largement s'appliquer dans le domaine des robots mobiles. Pour certaines applications on peut également prévoir plusieurs éléments 60 dans des plans différents.

## Revendications

1. Robot de nettoyage comportant une brosse rotative et un microordinateur, un moyen de détection du blocage de la brosse rotative associé audit microordinateur, un algorithme de dégagement du robot, un moyen de débrayage de la brosse rotative par rapport au moteur y associé, l'algorithme comprenant, lors d'un blocage, une opération de débrayage et un mouvement de recul du robot suivi d'une rotation et d'une reprise de l'avancement.

2. Robot selon la revendication 1 dans lequel le moyen de débrayage consiste en la déconnection du moteur par rapport à sa source d'alimentation.

3. Robot selon n'importe laquelle des revendications précédentes dans lequel la vitesse de rotation de la brosse est constamment analysée par le microcontrôleur.

4. Robot selon n'importe laquelle des revendications précédentes dans lequel la manoeuvre de dégagement comprend un recul d'une distance égale à son diamètre, l'axe de la brosse étant en roue libre.

5. Robot selon la revendication précédente dans lequel la manoeuvre de dégagement comprend ensuite une rotation et une opération de réembrayage de la brosse, une analyse de l'état de blocage ou déblocage de la brosse, et en cas de blocage persistent, un arrêt du mouvement de rotation et nouveau recul suivi d'une nouvelle tentative de rotation et ainsi de suite jusqu'à ce que la brosse soit dégagée, le nombre de réitérations maximal étant fixé par le programme et par la distance libre maximale de recul du robot.

6. Robot selon la revendication précédente dans lequel, si cette distance maximale est atteinte sans que la brosse ne soit dégagée, le robot continuera les itérations mais en marche avant.

7. Robot selon la revendication 5 ou 6 dans lequel l'algorithme prévoit que si aucune manoeuvre ne réussit à libérer la brosse, un mode d'attente d'une intervention manuelle est appliqué.

8. Robot selon n'importe laquelle des revendications précédentes comportant au moins une brosse rotative et un microordinateur contrôlant au moins, via un algorithme, la vitesse et/ou le trajet du robot **caractérisé en ce que** le microordinateur est associé à un algorithme qui tient au moins compte, pour déterminer ladite vitesse et/ou ledit trajet, de la mesure de la vitesse de rotation de ladite brosse rotative.

9. Robot de nettoyage selon la revendication précédente **caractérisé en ce qu'**il s'agit d'un robot aspirateur.

10. Robot selon la revendication précédente **caractérisé en ce que** le microordinateur tient au moins compte, pour déterminer la puissance d'aspiration, de la mesure de la vitesse de rotation de ladite brosse rotative.

11. Robot selon la revendication précédente incorporant une technique de guidage pour le nettoyage du sol **caractérisé en ce que** le trajet suivi par le robot dépend de la quantité de particules présente sur la surface à nettoyer, ladite quantité étant estimée par un analyseur de particules situé à proximité de l'orifice d'aspiration du robot aspirateur, ledit analyseur envoyant des signaux à un microordinateur porté par le robot mobile et commandant le déplacement du robot en fonction des dits signaux.

12. Robot selon la revendication précédente dans lequel le microordinateur peut commander un ralentissement et/ou un mouvement de va et vient linéaire et/ou un mouvement de va et vient en éventail.

13. Robot selon l'une des revendications 11 ou 12 dans lequel le microordinateur garde en mémoire une moyenne globale du niveau de poussière détectée par le détecteur de poussière sur une grande distance, l'activation d'un algorithme de nettoyage particulier tenant compte de ladite moyenne.

14. Robot selon n'importe laquelle des revendications précédentes **caractérisé en ce qu'**il comporte un senseur de collision linéaire entourant en totalité ou en partie la base du carénage, senseur comprenant un conducteur linéaire métallique et, parallèlement, un élément linéaire en plastique conducteur, par exemple en caoutchouc conducteur, dont les extrémités sont soumises à une différence de potentiel, l'élément linéaire en plastique étant apte à entrer élastiquement en contact avec l'élément linéaire conducteur sous l'effet d'une pression momentanée résultant de l'impact du robot avec un obstacle, la mesure du courant mesuré au niveau de l'élément conducteur étant un signal envoyé au microordinateur pour localiser le point d'impact sur la base du carénage.

## Patentansprüche

1. Reinigungsroboter mit einer Drehbürste und einem Mikrocomputer, einem dem Mikrocomputer zugeordneten Mittel zur Erfassung einer Blockierung der Drehbürste, einem Algorithmus zum Lösen des Roboters, einem Mittel zur Entkupplung der Drehbürste vom ihr zugeordneten Motor, wobei der Algorithmus bei einer Blockierung einen Entkupplungsschritt und eine Rücklaufbewegung des Roboters, gefolgt von einer Drehung und einer Wiederaufnahme der Vorwärtsbewegung, umfasst.

2. Roboter nach Anspruch 1, bei welchem das Mittel zur Entkupplung in der Trennung des Motors von seiner Speisequelle besteht.

3. Roboter nach einem der vorhergehenden Ansprüche, bei welchem die Drehzahl der Bürste ständig vom Mikrokontroller analysiert wird.

4. Roboter nach einem der vorhergehenden Ansprüche, bei welchem das Loslösmanöver einen Rücklauf um eine Strecke gleich seinem Durchmesser umfasst, wobei sich die Welle der Bürste im Freilauf befindet.

5. Roboter nach dem vorhergehenden Anspruch, bei welchem das Loslösmanöver anschließend eine Drehung und einen Schritt zur Wiedereinkupplung der Bürste, eine Analyse des Blockier- bzw. Deblockierzustands der Bürste und im Fall einer anhaltenden Blockierung einen Stopp der Drehbewegung und einen neuerlichen Rücklauf, gefolgt von einem neuerlichen Drehversuch und so weiter umfasst, bis die Bürste freigegeben ist, wobei die maximale Anzahl von Wiederholungen durch das Programm und durch die maximale freie Rücklaufstrecke des Roboters festgelegt ist.

6. Roboter nach dem vorhergehenden Anspruch, bei welchem der Roboter für den Fall, dass diese maximale Strecke erreicht ist, ohne dass die Bürste freigegeben ist, die schrittweisen Iterationen fortsetzt, aber in Vorwärtsrichtung.

7. Roboter nach Anspruch 5 oder 6, bei welchem der Algorithmus vorsieht, dass, sollte keinerlei Manöver zur Freisetzung der Bürste führen, ein Wartemodus für manuelles Eingreifen angewendet wird.

8. Roboter nach einem der vorhergehenden Ansprüche mit mindestens einer Drehbürste und einem Mikrocomputer, der über einen Algorithmus zumindest die Geschwindigkeit und/oder die Bahn des Roboters steuert, **dadurch gekennzeichnet, dass** dem Mikrocomputer ein Algorithmus zugeordnet ist, der zur Ermittlung besagter Geschwindigkeit und/oder besagter Bahn zumindest das Maß der Drehzahl der Drehbürste berücksichtigt.

9. Reinigungsroboter nach dem vorhergehenden Anspruch, **dadurch gekennzeichnet, dass** es sich um einen Saugroboter handelt.

10. Roboter nach dem vorhergehenden Anspruch, **dadurch gekennzeichnet, dass** der Mikrocomputer zur Ermittlung der Saugkraft zumindest das Maß der Drehzahl der Drehbürste berücksichtigt.

11. Roboter nach dem vorhergehenden Anspruch enthaltend eine Führungstechnik zur Reinigung von Böden, **dadurch gekennzeichnet, dass** die Bahn, welcher der Roboter folgt, von der Menge an auf der zu reinigenden Oberfläche vorhandenen Teilchen abhängt, welche Menge durch einen Teilchenanalysator geschätzt wird, der in der Nähe der Ansaugöffnung des Saugroboters angeordnet ist, wobei der Analysator Signale an den Mikrocomputer sendet, der vom beweglichen Roboter getragen wird und die Bewegung des Roboters in Abhängigkeit von diesen Signalen steuert.

12. Roboter nach dem vorhergehenden Anspruch, bei dem der Mikrocomputer eine Verlangsamung und/oder eine geradlinige Hin- und Herbewegung und/oder eine fächerförmige Hin- und Herbewegung des beweglichen Roboters steuern kann.

13. Roboter nach einem der Ansprüche 11 oder 12, bei dem der Mikrocomputer einen globalen Mittelwert für das vom Staubdetektor detektierte Staubniveau über eine große Strecke speichert, wobei die Aktivierung eines speziellen Reinigungsalgorithmus diesen Mittelwert berücksichtigt.

14. Roboter nach einem der vorhergehenden Ansprüche, **dadurch gekennzeichnet, dass** er einen linearen Kollisionssensor aufweist, der die Basis der Verkleidung zur Gänze oder zum Teil umgibt und einen linearen metallischen Leiter sowie, parallel dazu, ein lineares Element aus leitendem Kunststoff, beispielsweise leitendem Kautschuk, aufweist, dessen Enden einem Spannungsdifferenzial ausgesetzt sind, wobei das lineare Element aus Kunststoff eingerichtet ist, unter der Wirkung eines momentanen Drucks aufgrund eines Anpralls des Roboters an einem Hindernis mit dem linearen Leiterelement elastisch in Kontakt zu treten, und das Maß des am Leiterelement gemessenen Stroms ein Signal darstellt, das zur Lokalisierung der Anprallstelle auf der Basis der Verkleidung an den Mikrocomputer gesendet wird.

## Claims

1. A cleaning robot comprising a rotary brush and a microcomputer, a means of detecting the blocking of the rotary brush and an algorithm of disengagement of the robot being associated to said microcomputer, a means of disconnecting the rotary brush relative to the associated motor, the algorithm including, during a blocking, a movement of retreat of the robot followed by a rotation and the resumption of forward movement.

2. Robot according to claim 1 in which the means of disconnecting the rotary brush consists in the disconnection of the motor from its electrical supply.

3. Robot according to any of the preceding claims wherein the number of revolutions of the brush is constantly analyzed by the microcomputer.

4. Robot according to any of the preceding claims in which the algorithm of disengagement includes a retreat of a distance equal to its diameter, the axis of the brush being in free wheel.

5. Robot according to the preceding claim in which the operation of disengagement includes, after said retreat, a rotation and an operation of re-engagement of the brush, an analysis of the state of blocking or releasing of the brush, and in the event of the blocking persisting, a stop of the rotational movement and a new retreat followed by a new attempt at rotation and so on until the brush is released, the maximum number of reiterations being fixed by a program and by the maximum free distance left for the retreat of the robot.

6. Robot according to the preceding claim wherein, if this maximum distance is reached, without the brush being released, the robot will continue the iterations but in forward movement.

7. Robot according to any of the claims 5 or 6 in which the algorithm provides that if no operation succeeds with the release of the brush, a mode of waiting for a manual intervention is applied.

8. Robot according to any of the preceding claims wherein the microcomputer controls , via an algorithm, at least the speed and/or the path of the robot and wherein the microcomputer is associated with an algorithm which takes into account, in order to determine the aforementioned speed and/or the aforementioned path, the measurement of the rotational speed of the aforementioned rotary brush.

9. Robot for cleaning according to the preceding claim **characterized in that** it is a robotic vacuum-cleaner.

10. Robot according to claim 9 **characterized in that** the microcomputer takes at least in account, for determining the power of aspiration, the measurement of the revolution speed of the aforementioned rotary brush.

11. Robot according to the preceding claim wherein the algorithm incorporates a guiding technique for the cleaning of the ground **characterized in that** the path followed by the robot depends on the quantity of particles present on the surface to clean, the said quantity being estimated by a particle analyzer located near the suction nozzle of the robotic vacuum cleaner, the aforementioned analyzer sending the signals to the microcomputer carried by the mobile robot and controlling the displacement of the robot according to the said signals.

12. Robot according to the preceding claim wherein the algorithm can cause a deceleration and/or a linear back and forth movement and/or a back and forth movement in a fan shape of the mobile robot.

13. Robot according to any of the claims 11 or 12 wherein the microcomputer keeps in memory a global average of dust level as detected by the sensor of dust on a long distance, the activation of one particular algorithm for cleaning taking account of the aforementioned average.

14. Robot according to any of the preceding claims **characterized in that** it comprises a linear sensor of collision surrounding entirely or partly the lower outside portion of the careenage, the sensor including a linear metal conductor and, in parallel, a linear element made of conducting plastic, for example conducting rubber, whose ends are subjected to a potential difference, the linear element in plastic being able to come elastically into contact with the conducting linear element under the effect of a temporary pressure resulting from the impact of the robot with an obstacle, the measurement of the current measured at the level of the conducting element being a signal fed to the microcomputer to locate the point of impact at the lower outside portion of the careenage.
